(19) Europäisches Patentamt
European Patent Office
Office européen des brevets

(11) **EP 2 571 249 B1**

(12) **EUROPEAN PATENT SPECIFICATION**

(45) Date of publication and mention
of the grant of the patent:
**25.11.2015 Bulletin 2015/48**

(51) Int Cl.:
*H04N 5/232* (2006.01)  *H04N 5/265* (2006.01)
*G06T 5/50* (2006.01)

(21) Application number: **12197315.0**

(22) Date of filing: **22.07.2011**

(54) **Image synthesizing device, image synthesizing method and computer readable medium**

Bildsynthetisierungsvorrichtung, Bildsynthetisierungsverfahren und computerlesbares Medium

Dispositif de synthèse d'images, procédé de synthèse d'images et support lisible sur ordinateur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2010  JP 2010165968
18.08.2010  JP 2010182677**

(43) Date of publication of application:
**20.03.2013  Bulletin 2013/12**

(62) Document number(s) of the earlier application(s) in
accordance with Art. 76 EPC:
**11174950.3 / 2 410 734**

(73) Proprietor: **CASIO COMPUTER CO., LTD.
Shibuya-ku,
Tokyo (JP)**

(72) Inventor: **Manabe, Yoshitsugu
Tokyo, 205-8555 (JP)**

(74) Representative: **Grünecker Patent- und
Rechtsanwälte
PartG mbB
Leopoldstraße 4
80802 München (DE)**

(56) References cited:
**EP-A1- 1 752 947      EP-A1- 1 933 271
US-A1- 2006 098 112    US-A1- 2007 242 900
US-A1- 2008 074 441**

EP 2 571 249 B1

## Description

This application claims priority from Japanese Patent Application Nos. 2010-165968, filed on July 23, 2010, and 2010-182677, filed on August 18, 2010.

Embodiments described herein relate to an image synthesizing device, an image synthesizing method and a computer readable medium.

In a related art, pixels of continuously captured images are added and synthesized, thereby generating an image having a sufficient brightness for recording even in an environment such as a night scene in which the amount of light is not sufficient.

Further, an image synthesizing technique is disclosed in Japanese Unexamined Patent Application Publication No. 2006-148550. As disclosed in this document, in this image synthesizing technique, a fluctuation in image capture angle of view is corrected in performing image synthesis at the time of hand-held image capture in which a user captures an image by holding a camera by hand.

However, in the case of the foregoing image synthesizing technique, when a moving object exists at an image capture angle of view, an image in which an afterimage of the moving object remains will be obtained even with the use of the foregoing image synthesizing technique.

EP 1 933 271 A1 relates to image synthesis. This image synthesis technique also accounts for an object position shift when combining/averaging multiple photographs showing a moving object. For this, multiple short time exposure photographs are taken and the similarity between images is evaluated. In regions of low similarity images are not averaged but only one image is used to overcome object blurring.

EP 1 752 947 A1 relates to image synthesis in a traffic lane marker recognition system. The system can provide a composite image of the traffic lane makers. Past and present images can be composited to appear realistic even when the vehicle moves and changes position. The system uses gain amplification to achieve the same brightness of images taken of different road sections due to movement at a certain speed with possible different environmental conditions. For taking images, the camera is adjusted to achieve the best result based on a detected brightness. As optimum image capture adjustment is not always achieved, image brightness adjustment is required prior to image combination. To achieve a same brightness of a traffic lane when combining different images, the brightness differences or ratios are determined based photographing conditions of present and past images.

The above mentioned problems are solved by the features of the independent claims.

According to one or more illustrative aspects of the present invention, there is provided an image synthesizing device.

According to one or more illustrative aspects of the present invention, there is provided an image synthesizing method.

According to one or more illustrative aspects of the present invention, there is provided a computer-readable medium storing a program for causing the computer to perform operations.

Other aspects and advantages of the present invention will be apparent from the following description, the drawings and the claims.


FIG. 1 is a circuit block diagram of an image capture device according to a first example;

FIG. 2 is a flow chart illustrating a procedure of processing performed by the image capture device;

FIG. 3 is a flow chart illustrating a processing procedure of a moving object determination and $\alpha$-blending process;

FIG. 4 is a diagram illustrating examples of continuously captured images obtained by continuous shooting;

FIG. 5A is a diagram illustrating a processing example obtained by a smoothing process;

FIG. 5B is a diagram illustrating a processing example obtained by an enhancement process;

FIG. 6A illustrates a synthesized image obtained by addition and synthesis;

FIG. 6B illustrates a synthesized image in the present example;

FIG. 7 is a circuit block diagram of an image capture device according to a first embodiment of the present invention;

FIG. 8 is a flow chart illustrating a procedure of processing performed by the image capture device according to the first embodiment;

FIG. 9A is a diagram illustrating an underexposure image of images obtained by continuously shooting images while changing an exposure condition in the first embodiment;

FIG. 9B is a diagram illustrating an overexposure image of images obtained by continuously shooting while changing the exposure condition in the first embodiment;

FIG. 10A is a diagram illustrating a processing example obtained by a smoothing process;

FIG. 10B is a diagram illustrating a processing example obtained by an enhancement process; and

FIG. 11 is a flow chart illustrating a procedure of processing performed in a variation of the first embodiment.


Hereinafter, exemplary embodiments and examples of the present invention will be now described with reference to the drawings.

First Example

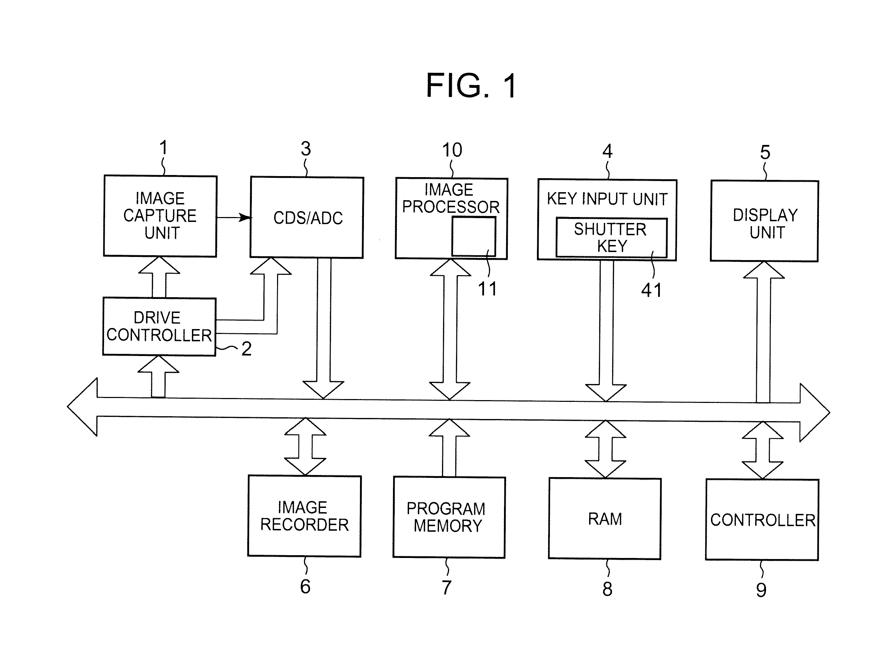

FIG. 1 is a circuit block diagram of an image capture device including an image synthesizing device according to a first example of the present invention. The image capture device includes an image capture unit 1, a drive controller 2, a CDS/ADC 3, a key input unit 4, a display unit 5, an image recorder 6, a program memory 7, a RAM 8, a controller 9, and an image processor 10. These components are connected to each other via a bus line. The key input unit 4 includes a shutter key 41 for receiving a recording instruction from a person who captures an image, and the image processor 10 includes a synthesizer 11.

Referring to FIG. 1, the image capture unit 1 incorporates a driver for retaining, as accumulated electric charges, a light intensity for a given period of time and for outputting, as an analog image capture signal, the electric charges to the CDS/ADC 3 in accordance with control carried out using an image sensor such as a CMOS, RGB color filters provided on the image sensor, and the drive controller 2. Further, the image capture unit 1 acquires a plurality of images (color images) when receiving an image capture instruction from a person, who captures an image, via the shutter key 41, the controller 9 and the drive controller 2.

The CDS/ADC 3 is a circuit for receiving the analog image capture signal outputted from the image capture unit 1 and responsive to an optical image of an object. The CDS/ADC 3 includes components such as: a CDS for retaining the image capture signal; a gain control amplifier (GCA) for amplifying the image capture signal; and an A/D converter (ADC) for converting the amplified image capture signal into a digital image capture signal. It should be noted that control concerning gain control amplifier adjustment is also carried out in response to an instruction provided from the drive controller 2. Therefore, even when a plurality of images are acquired under the same exposure condition (shutter speed or F-number), generation of a plurality of images, for which conditions are different, is enabled by sequentially changing RGB gain control amplifiers and/or color shades of images.

In the present example, the control concerning the gain control amplifier is carried out by the drive controller 2, but the present invention is not limited thereto. For example, the foregoing control may be carried out by the controller 9.

The key input unit 4 includes, in addition to the foregoing shutter key 41, various keys for detecting switching to an image capture mode for image acquisition/recording according to the present invention, display switching, etc.

The display unit 5 has the function of displaying a synthesized image. After a synthesizing process according to the present invention has been executed, the image recorder 6 stores or holds image data (image file) encoded in a JPEG format. The program memory 7 stores a program executed by the controller 9 and/or the image processor 10, and this program is read by the controller 9 when necessary. The RAM 8 has the function of temporarily retaining data that is generated by each process and is being processed. The controller 9 controls processing operations of the entire image capture device. The image processor 10 includes the synthesizer 11 associated with features of the present invention in addition to image data encoding/decoding processing.

Specifically, the synthesizer 11 synthesizes a single reference image, selected from continuously captured images, with a synthesized image obtained by addition and synthesis of the continuously captured images, and uses, for the resulting synthesized image, an after-mentioned moving object determination map as a transparency map ($\alpha$ map) provided for a difference region, thus reducing an afterimage caused by a moving object.

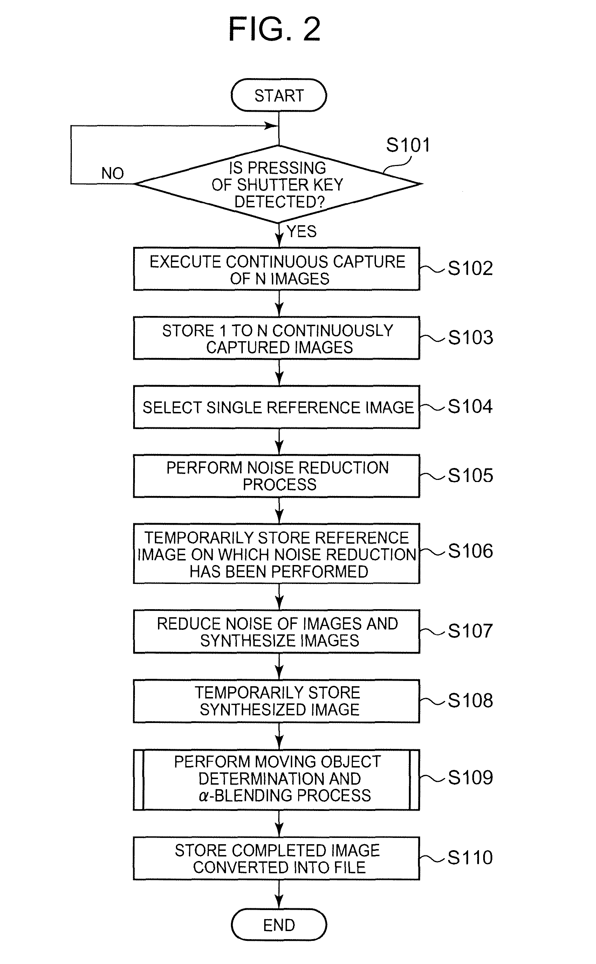

Next, operations performed in the first example will be described. When a user has operated a mode button provided in the key input unit 4 and set the image capture mode according to the present example, the controller 9 reads the program from the program memory 7, and starts processing as illustrated in a flow chart of FIG. 2.

Specifically, the controller 9 determines whether or not pressing of the shutter key 41 is detected (Step S101). Upon detection of the pressing of the shutter key 41, an instruction is provided to the drive controller 2 to execute continuous capture of N images (Step S102). Subsequently, based on image data obtained by the continuous capture, continuously captured images, consisting of YUV images represented by color space information of brightness/color difference, are generated and stored in the RAM 8 (Step S103).

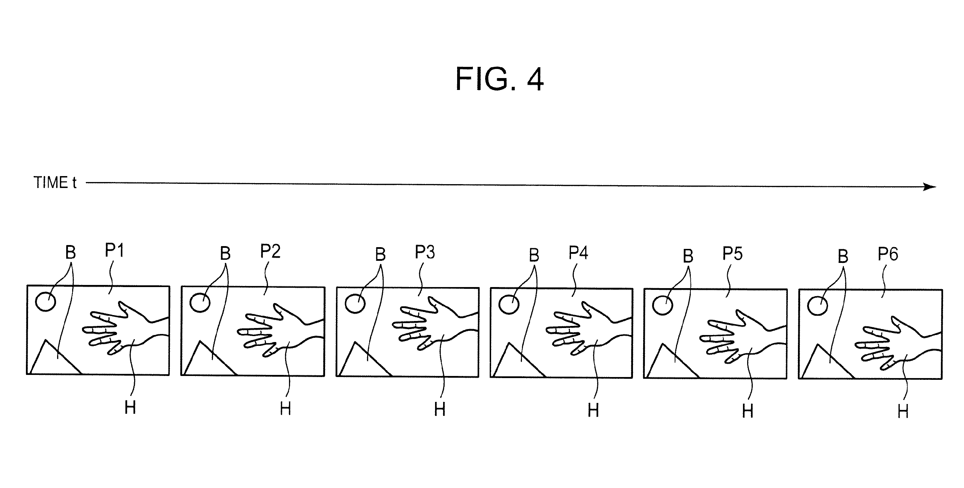

For example, when the number N of the continuously captured images is six, six continuously captured images P1 to P6 consisting of YUV images are stored in the RAM 8 as illustrated in FIG. 4. In FIG. 4, an arrow t represents a time axis, and the continuously captured images P1 to P6 are obtained by continuous capture performed at substantially the same image capture angle of view in a state where a hand H serving as a moving object is waved up and down in a background B representing the entire image capture angle of view. For the continuously captured images P1 to P6, the background B is the same; however, an image of the hand H is located at a relatively higher position in the background B in accordance with a lapse of the time t (P1 → P2 → P3), and the image of the hand H in the image P3 is located at the highest position. Furthermore, the image of the hand H is located at a relatively lower position in the background B in accordance with a lapse of the time t (P3 → P4 → P5 → P6), and the image of the hand H in the image P6 is located at the lowest position.

Note that in the continuous capture of the continuously captured images P1 to P6, an image motion blur caused by camera shake is corrected by a known technique (e.g., a technique for correcting an angle of view by CCD shift or lens shift).

Next, a reference image is selected from the continuously captured images (Step S104). In selecting the reference image, an image in which the amount of motion of the moving object is the smallest is selected from the continuously captured images. Accordingly, from the continuously captured images P1 to P6, the image at a turning point at which the image of the hand H that has moved from a downward position to an upward position starts to move from the upward position to the downward position is selected as the image in which the amount of motion of the moving object (image of the hand H) is the smallest. In other words, the continuously captured image P3, in which the image of the hand H is located at the relatively highest position, is selected as the reference image.

Thereafter, using a LPF (low-pass filter), a noise reduction process is performed on image data of the selected reference image (Step S105). Then, YUV image data of the reference image on which the noise reduction process has been performed is temporarily stored in the RAM 8 (Step S106). Accordingly, in the example illustrated in FIG. 4, the image data of the continuously captured image P3 is subjected to the noise reduction process by the process of Step S105, and the resulting YUV image data is stored in the RAM 8 by the process of Step S106.

Further, a plurality of the continuously captured images are subjected to noise reduction and synthesized (Step S107). Specifically, when the YUV image data of the plurality of continuously captured images is added and averaged on a pixel-by-pixel basis, the images are allowed to be synthesized while being subjected to noise reduction. Equations (1) to (3) for addition and averaging of the YUV image data of the plurality of continuously captured images, i.e., the N continuously captured images, are provided below. It should be noted that Y_result, U_result and V_result represent information of respective pixel brightness/color difference parameters, obtained after the synthesis.

$$Y\_result = (Y[0] + Y[1] + \ldots + Y[N])/N \qquad \cdots (1)$$

$$U\_result = (U[0] + U[1] + \ldots + U[N])/N \qquad \cdots (2)$$

$$V\_result = (V[0] + V[1] + \ldots + V[N])/N \qquad \cdots (3)$$

Naturally, a processing method in this case is not limited to addition and averaging but any other processing method may be used as long as it is a synthesizing method in which a plurality of continuously captured images are used and a noise reduction effect is achieved. Then, the YUV image data of the synthesized image of the whole continuously captured images, on which noise reduction has been performed, is temporarily stored in the RAM 8 (Step S108).

Accordingly, at the time when the process of Step S108 is ended, the following image data is temporarily stored in the RAM 8.

    (1) YUV image data of each continuously captured image
    (2) YUV image data of the reference image on which the noise reduction process has been performed
    (3) YUV image data of the synthesized image on which the noise reduction process has been performed

Then, a process for synthesizing the YUV image data (2) of the reference image with the YUV image data (3) of the synthesized image is performed in such a manner that a moving object determination and $\alpha$-blending process of the subsequent step, i.e., Step S109, is included.

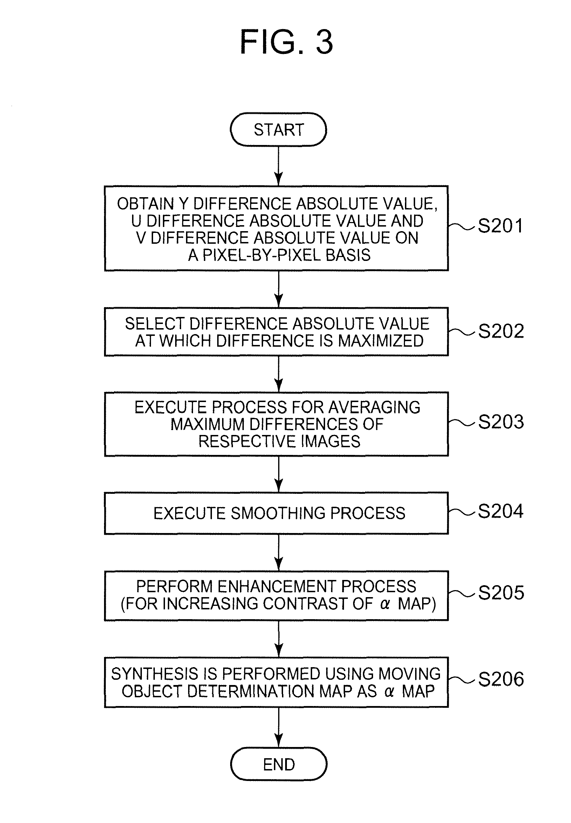

FIG. 3 is a flow chart illustrating a processing procedure of the moving object determination and $\alpha$-blending process (Step S109). In the flow chart illustrated in FIG. 3, the following equations, codes or functions will be used (see Table 1).

[TABLE 1]

| Equations, Codes or Functions | Explanation |
|---|---|
| Y_Base_Nr, U_Base_Nr, V_Base_Nr | Respective YUV parameters of the data (2) of the reference image on which the noise reduction has been performed |
| V[n], U[n], V[n] | Respective YUV parameters of the n-th image data |
| N | The number of images that are synthesized |
| fMax() | Maximum value calculation function |

(continued)

| Equations, Codes or Functions | Explanation |
| --- | --- |
| fLpf() | Smoothing function |
| fEmphasis() | Map emphasis function |

Referring to the flow chart of FIG. 3, a difference absolute value between the YUV image data (2) of the reference image on which the noise reduction process has been performed and the YUV image data (1) of each continuously captured image is obtained by the controller 9 on a pixel-by-pixel basis for the YUV image data (1) of each continuously captured image as indicated by the following equations (4) to (6) (Step S201).

$$\text{Diff\_Y}[n] = |\text{Y\_Base\_Nr} - \text{Y}[n]| \quad\quad \cdots(4)$$

$$\text{Diff\_U}[n] = |\text{U\_Base\_Nr} - \text{U}[n]| \quad\quad \cdots(5)$$

$$\text{Diff\_V}[n] = |\text{V\_Base\_Nr} - \text{V}[n]| \quad\quad \cdots(6)$$

In other words, the foregoing difference absolute values are obtained on a pixel-by-pixel basis for each continuously captured image.

Furthermore, the greater the difference, the more likely it is that a region associated therewith is a region where the object is moved, and therefore, the difference absolute value at which the difference is maximized (at which the difference is maximized for the respective corresponding pixels of the continuously captured images) as indicated by the following equation (7) is selected (Step S202).

$$\text{Diff}[n] = \text{fMax}(\text{Diff\_Y}[n], \text{Diff\_U}[n], \text{Diff\_V}[n]) \quad\quad \cdots (7)$$

Next, as indicated by the following equation (8), a process for averaging maximum differences of the respective continuously captured images except the reference image is executed (Step S203).

$$\text{Ave\_Diff} = (\text{Diff}[0] + \text{Diff}[1] + \ldots + \text{Diff}[n])/N - 1 \quad\quad \cdots (8)$$

Moreover, as indicated by the following equation (9), a smoothing process is executed (Step S204).

$$\text{Ave\_Diff\_Lpf} = \text{fLpf}(\text{Ave\_Diff})$$

$$\cdots(9)$$

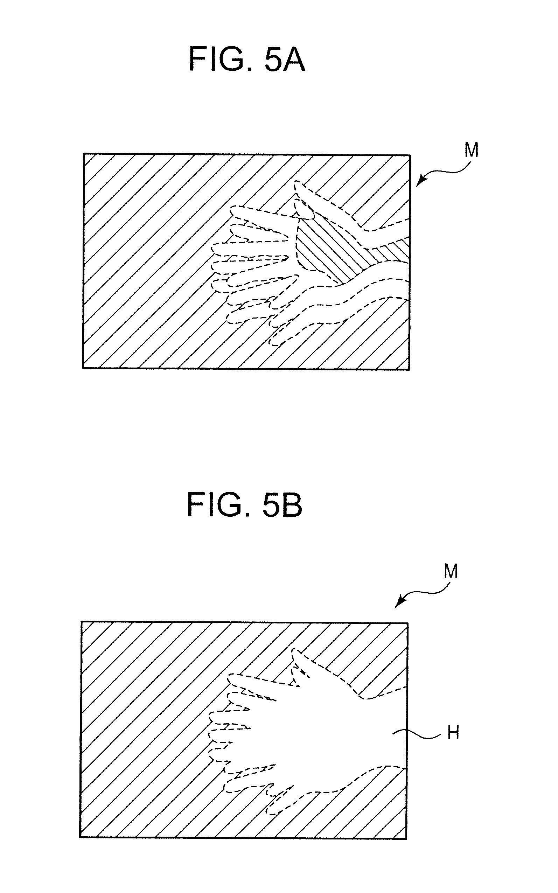

As a result of the smoothing process in Step S204, a moving object determination map M is generated as illustrated in FIG. 5A. In the moving object determination map M, a region indicated by oblique lines is a region where $\alpha = 0$ and total transmission is allowed, and a void region is a region where $\alpha = 255$ and transmission is not allowed.

Subsequently, as indicated by the following equation (10), an enhancement process is performed to increase a contrast of the moving object determination map M (Step S205).

$$\text{Map\_Move} = \text{fEmphasis}(\text{Ave\_Diff\_Lpf}) \quad\quad \cdots (10)$$

As a result of the enhancement process in Step S205, the contrast of a region of the moving object determination map M where the images of the hands H serving as the moving objects are overlapped is increased as illustrated in FIG. 5B.

Then, finally, using the moving object determination map M (Map_Move [0~255]: 0 = no moving object) illustrated in FIG. 5B as an $\alpha$ map, the foregoing YUV image data (2) of the reference image on which the noise reduction process has been performed is synthesized with the YUV image data (3) of the synthesized image on which the noise reduction process has been performed (Step S206).

The respective YUV parameters (Y_result, U_result, and V_result) for the respective synthesized pixels are represented by the following equations (11) to (13).

$$Y\_result = (Y\_Nr\_Mix \times (255 - Map\_Move) + Y\_Base\_Nr \times Map\_Move)/255 \cdots (11)$$

$$U\_result = (U\_Nr\_Mix \times (255 - Map\_Move) + U\_Base\_Nr \times Map\_Move)/255 \cdots (12)$$

$$V\_result = (V\_Nr\_Mix \times (255 - Map\_Move) + V\_Base\_Nr \times Map\_Move)/255 \cdots (13)$$

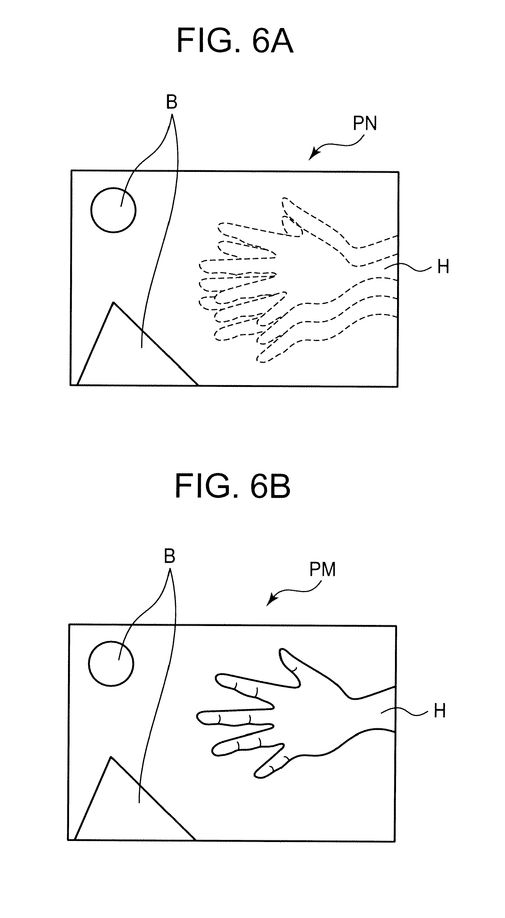

Thus, as illustrated in FIG. 6B, YUV image data representing a synthesized image PM including the background B and the hand H is generated.

For the purpose of comparison, FIG. 6A illustrates a synthesized image PN obtained simply by performing an averaging and addition process on the continuously captured images.

As illustrated in FIG. 6A, in the synthesized image PN obtained simply by performing an averaging and addition process on the continuously captured images, a large motion blur occurs in the image of the hand H serving as a moving object image. On the other hand, according to the present embodiment, the synthesized image PM in which a motion blur of the moving object is small may be obtained as illustrated in FIG. 6B even when the image of the hand H is moved.

Besides, since the smoothing process is performed in Step S204 as mentioned above, a boundary between the moving object (hand H) and the background, which is created by the synthesis, is allowed to be more natural.

In addition, the process for increasing the contrast of the map M is executed in Step S205 described above, thus also enabling a reduction in afterimage (ghost image) caused by a motion blur in the synthesizing process.

The YUV image data representing the synthesized image PM is generated in the above-described manner, thus completing the moving object determination and α-blending process in the flow chart of FIG. 2; then, the YUV image data of the synthesized image PM serving as a completed image is encoded in a JPEG format and converted into a file, and is recorded and stored in the image recorder 6 (Step S 110), thus ending the processing.

First Embodiment

In the first example, the case where the influence of a motion blur of the moving object is reduced when a plurality of images obtained by continuous capture are simply synthesized has been described. The present invention is applicable as long as images are continuously captured, and is thus also applicable to a case where images, which are continuously captured while an exposure condition is changed, are synthesized and an image with an increased dynamic range is generated.

The following description of the first embodiment will be made on an example in which the invention of the present application is applied to a case where images, which are continuously captured while an exposure condition is changed, are synthesized and an image with an increased dynamic range is generated.

In the following circuit configuration and flow chart, components similar to those of the first example are identified by the same reference characters or numerals in the second embodiment, and the description thereof will be omitted.

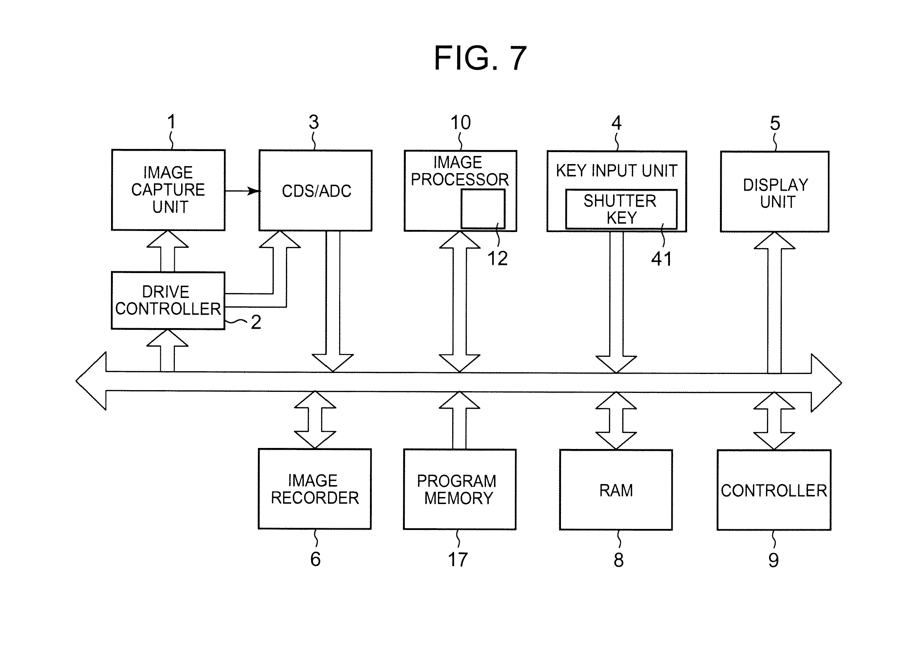

FIG. 7 is a circuit block diagram of an image capture device including an image synthesizing device according to the first embodiment. The first embodiment differs from the first example in that a program memory 17 and a synthesizer 12 are provided instead of the program memory 7 and the synthesizer 11.

The program memory 17 stores a program executed by the controller 9, the image processor 10 and the synthesizer 12, and this program is read by the controller 9 when necessary.

Further, the synthesizer 12 executes synthesis of an overexposure image and a pseudo overexposure image (described later), and uses, for the resulting synthesized image, an moving object determination map as a transparency map (α map) provided for a difference region, thus reducing an afterimage caused by a moving object. Furthermore, pixels of the synthesized image and an underexposure image are added and synthesized, thereby increasing a dynamic range.

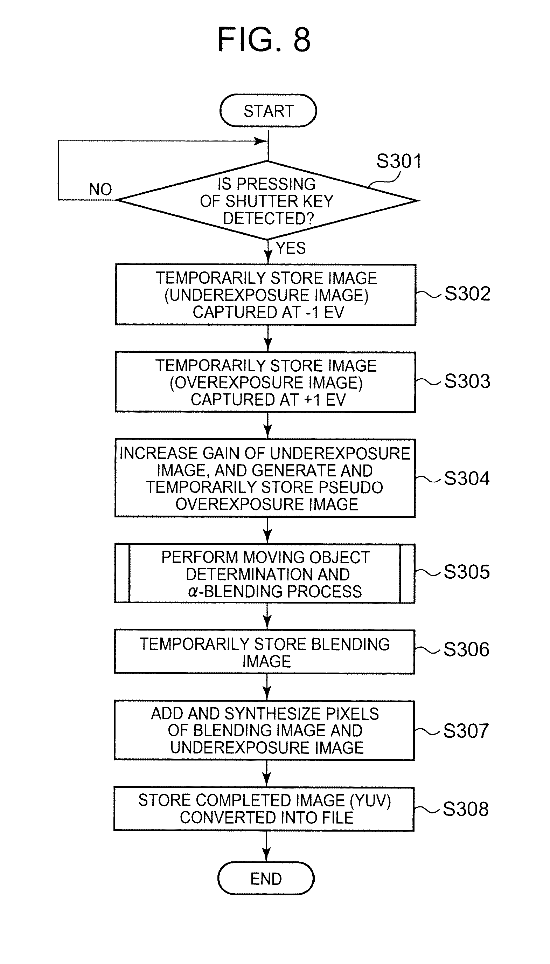

Next, operations performed in the first embodiment will be described with reference to FIG. 8. When a user has operated a mode button provided in the key input unit 4 and set the image capture mode according to the present embodiment, the controller 9 reads the program from the program memory 17, and starts processing as illustrated in the flow chart of FIG. 8.

Specifically, the controller 9 determines whether or not pressing of the shutter key 41 is detected (Step S301). Upon detection of the pressing of the shutter key 41, an appropriate exposure is detected; in addition, an instruction is provided to the drive controller 2 to execute image capture at an exposure value of -1 EV, which is reduced by "1" from an exposure value of 0 EV for the appropriate exposure, and an underexposure image obtained by the image capture at -1 EV is temporarily stored in the RAM 8 (Step S302). Subsequently, an instruction is provided to the drive controller 2 to execute image capture at an exposure value of +1 EV, which is increased by "1" from an exposure value of 0 EV for the appropriate exposure, and an overexposure image obtained by the image capture at +1 EV is temporarily stored in the RAM 8 (Step S303).

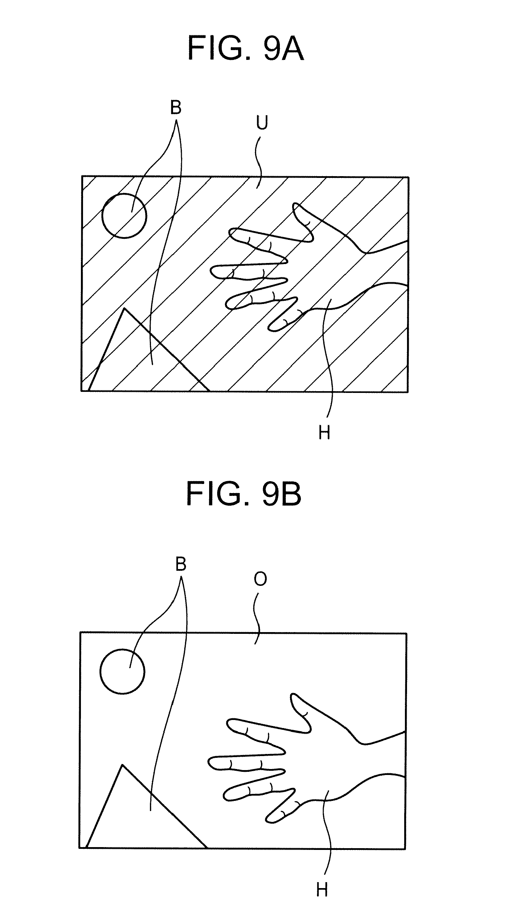

Accordingly, an underexposure image U illustrated in FIG. 9A and including an YUV image and an overexposure image O illustrated in FIG. 9B and including a YUV image are stored in the RAM 8 by the processes of Steps S302 and S303, respectively (in addition, an image captured at an appropriate exposure may naturally be obtained). The continuously captured underexposure image U and overexposure image O are continuously captured at substantially the same image capture angle of view in a state where the hand H serving as the moving object is waved up and down in the background B representing the entire image capture angle of view.

The background B of the image U is the same as that of the image O, but the image of the hand H in the previously captured overexposure image O is located at a position lower than that of the image of the hand H in the subsequently captured underexposure image U.

Note that in the continuous capture of the continuously captured images U and O, an image motion blur caused by camera shake is corrected by a known technique (e.g., a technique for correcting an angle of view by CCD shift or lens shift).

Next, a gain of the underexposure image U is increased so that the exposure condition thereof is equivalent to that of the overexposure image O; thus, a pseudo overexposure image thereof is generated and temporarily stored in the RAM 8 (Step S304). Specifically, there is a fourfold difference between an image brightness of the underexposure image U captured at -1 EV and that of the overexposure image O captured at +1 EV, and the brightness of the overexposure image O is four times as high as that of the underexposure image U. Accordingly, the underexposure image U is processed at a fourfold digital gain, thereby generating the pseudo overexposure image whose exposure condition is tentatively equal to that of the overexposure image O.

Subsequently, a moving object determination and $\alpha$-blending process is performed (Step S305). This moving object determination and/$\alpha$-blending process is generally similar to that performed in Step S 109 in the first example, and a general process flow thereof is similar to that described with reference to FIG. 3. In the description of the flow chart of FIG. 3, the following equations, codes or functions will be used instead of the equations, codes or functions of the first embodiment (see TABLE 2).

[TABLE 2]

| Equations, Codes or Functions | Explanation |
| --- | --- |
| Y_Under_4, U_Under_4, V_Under_4 | YUV parameters of a pseudo overexposure image |
| Y_Over, U_Over, V_Over | YUV parameters of an overexposure image |
| fMax() | Maximum value calculation function |
| fLpf() | Smoothing function |
| fEmphasis() | Map emphasis function |

Further, in Step S201 of the flow chart of FIG. 3, the controller 9 obtains a difference absolute value between the overexposure image and the pseudo overexposure image on a pixel-by-pixel basis for both of the images as indicated by the following equations (14) to (16).

$$\mathrm{Diff\_Y} = |\mathrm{Y\_Under\_4} - \mathrm{Y\_Mid}| \qquad \cdots(14)$$

$$\mathrm{Diff\_U} = |\mathrm{U\_Under\_4} - \mathrm{U\_Mid}| \qquad \cdots(15)$$

$$\mathrm{Diff\_V} = |\mathrm{V\_Under\_4} - \mathrm{V\_Mid}| \qquad \cdots(16)$$

In other words, the foregoing difference absolute values are obtained on a pixel-by-pixel basis for both of the images.

Furthermore, the greater the difference, the more likely it is that a region associated therewith is a region where the object is moved, and therefore, the difference absolute value at which the difference is maximized (at which the difference is maximized for the respective corresponding pixels of both of the images) as indicated by the following equation (17) is selected in Step S202.

$$\text{Diff} = \text{fMax}(\text{Diff\_Y}, \text{Diff\_U}, \text{Diff\_V}) \qquad \cdots (17)$$

Next, as indicated by the following equation (18), a process for averaging maximum differences of both of the images is executed in Step S203.

$$\text{Ave\_Diff} = (\text{Diff}[0] + \text{Diff}[1] + \ldots + \text{Diff}[n])/N - 1 \qquad \cdots (18)$$

Moreover, as indicated by the following equation (19), a smoothing process is executed in Step S204.

$$\text{Diff\_Lpf} = \text{fLpf}(\text{Diff})$$

$$\cdots (19)$$

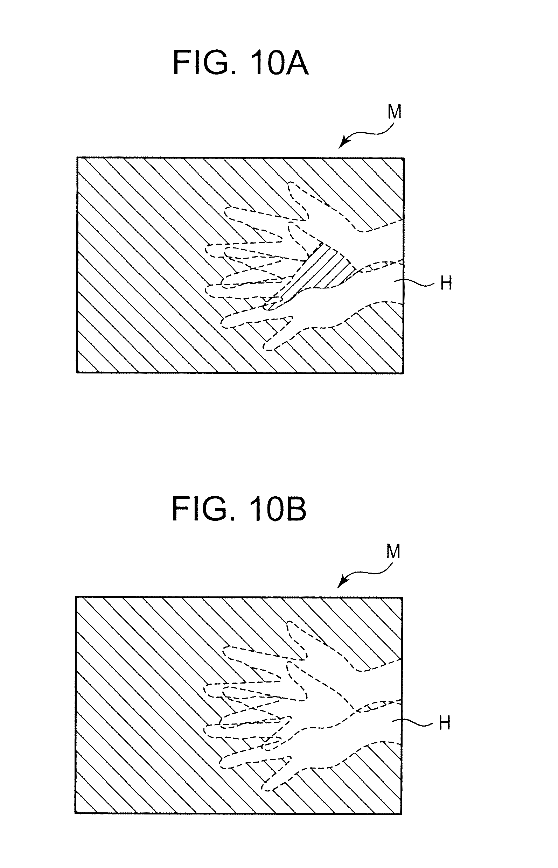

As a result of the smoothing process in Step S204, a moving object determination map M is generated as illustrated in FIG. 10A. In the moving object determination map M, a region indicated by oblique lines is a region where $\alpha = 0$ and total transmission is allowed, and a void region is a region where $\alpha = 255$ and transmission is not allowed.

Subsequently, as indicated by the following equation [20], an enhancement process is performed to increase a contrast of the moving object determination map M in Step S205.

$$\text{Map\_Move} = \text{fEmphasis}(\text{Diff\_Lpf}) \qquad \cdots (20)$$

As a result of the enhancement process in Step S205, the contrast of a region of the moving object determination map M where the images of the hands H serving as the moving objects are located is increased as illustrated in FIG. 10B.

Thereafter, using the moving object determination map M (Map_Move [0 ~255]: 0 = no moving object) illustrated in FIG. 10B as an $\alpha$ map, the foregoing pseudo overexposure image and the overexposure image are synthesized in Step 206.

The respective YUV parameters (Y_result_Over, U_result_Over, and V_result_Over) for the respective pixels of the synthesized image (hereinafter referred to as a "blending image") are represented by the following equations (21) to (23).

$$\text{Y\_result\_Over} = (\text{Y\_Over} \times (255 - \text{Map\_Move}) + \text{Y\_Under\_4} \times \text{Map\_Move})/255 \cdots (21)$$

$$\text{U\_result\_Over} = (\text{U\_Over} \times (255 - \text{Map\_Move}) + \text{U\_Under\_4} \times \text{Map\_Move})/255 \cdots (22)$$

$$\text{V\_result\_Over} = (\text{V\_Over} \times (255 - \text{Map\_Move}) + \text{V\_Under\_4} \times \text{Map\_Move})/255 \cdots (23)$$

Then, in Step S306 subsequent to Step S305 in the flow chart of FIG. 8, the blending image is temporarily stored in the RAM 8. Subsequently, the pixels of the blending image temporarily stored in the RAM 8 and the underexposure image U are added and synthesized (Step S307).

Upon generation of the YUV image data representing the synthesized image PM as described above, the YUV image data of the synthesized image PM serving as a completed image is encoded in a JPEG format and converted into a file, and is recorded and stored in the image recorder 6 (Step S308), thus ending the processing.

Variation of First Embodiment

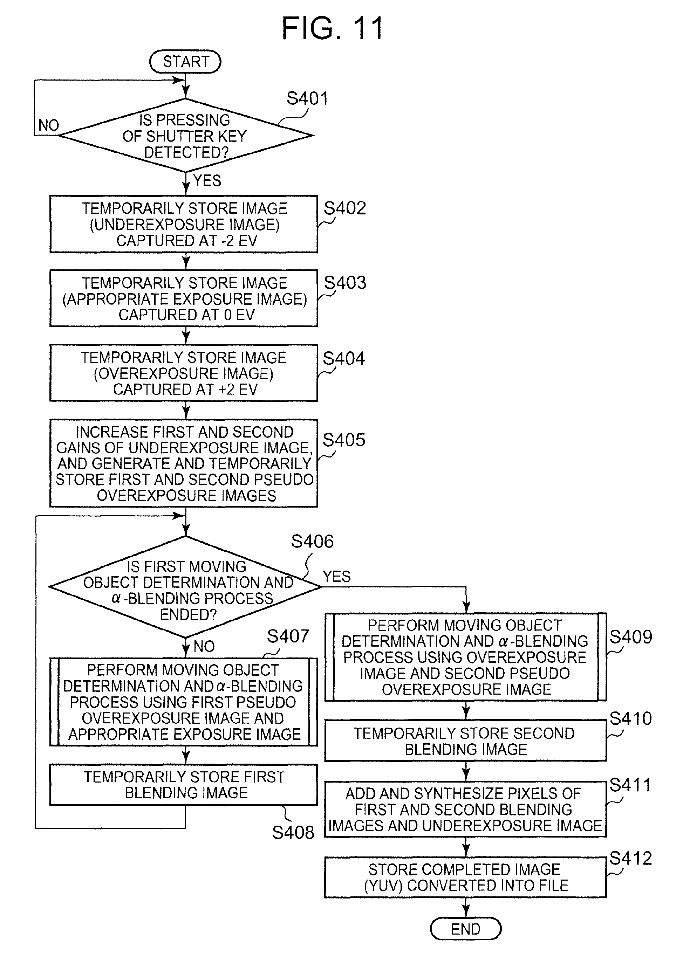

FIG. 11 is a flow chart illustrating a procedure of processing in a variation of the first embodiment, in which three images, i.e., an underexposure image, an appropriate exposure image and an overexposure image, captured at substantially the same angle of view are used. When a user has operated a mode button provided in the key input unit 4 and set the image capture mode according to the present embodiment, the controller 9 reads the program from the program memory 17, and starts processing as illustrated in the flow chart.

Specifically, the controller 9 determines whether or not pressing of the shutter key 41 is detected (Step S401). Upon detection of the pressing of the shutter key 41, an appropriate exposure is detected; in addition, an instruction is provided to the drive controller 2 to execute image capture at an exposure value of -2 EV, which is reduced by "2" from an exposure value of 0 EV for the appropriate exposure, and an underexposure image obtained by the image capture at -2 EV is temporarily stored in the RAM 8 (Step S402).

Furthermore, an instruction is provided to the drive controller 2 to execute image capture at an exposure value of 0 EV for the appropriate exposure, and an appropriate exposure image obtained by the image capture at 0 EV is temporarily stored in the RAM 8 (Step S403). Moreover, an instruction is provided to the drive controller 2 to execute image capture at an exposure value of +2 EV, which is increased by "2" from an exposure value of 0 EV for the appropriate exposure, and an overexposure image obtained by the image capture at +2 EV is temporarily stored in the RAM 8 (Step S404).

Accordingly, the underexposure image, appropriate exposure image and overexposure image, each including a YUV image, are stored in the RAM 8 by the processes of Steps S402, S403 and S404, respectively.

Next, a gain of the underexposure image is increased so that the exposure condition thereof is equivalent to that of the appropriate exposure image, and a first pseudo equal overexposure image is thus generated and is temporarily stored in the RAM 8; in addition, a gain of the underexposure image is increased so that the exposure condition thereof is equivalent to that of the overexposure image, and a second pseudo overexposure image is thus generated and is temporarily stored in the RAM 8 (Step S405).

Specifically, there is an eightfold difference between an image brightness of the underexposure image captured at -2 EV and that of the appropriate exposure image captured at 0 EV, and therefore, the brightness of the appropriate exposure image is eight times as high as that of the underexposure image. Accordingly, the underexposure image is processed at an eightfold digital gain, thereby generating the first pseudo overexposure image whose exposure condition is tentatively equal to that of the appropriate exposure image.

Further, there is a 16-fold difference between the image brightness of the underexposure image captured at -2 EV and that of the overexposure image captured at +2 EV, and therefore, the brightness of the overexposure image is 16 times as high as that of the underexposure image. Accordingly, the underexposure image is processed at a 16-fold digital gain, thereby generating the second pseudo overexposure image whose exposure condition is tentatively equal to that of the overexposure image. Then, the first and second pseudo overexposure images are temporarily stored in the RAM 8.

Subsequently, it is determined whether or not a first moving object determination and $\alpha$-blending process is ended (Step S406). When the moving object determination and $\alpha$-blending process has not yet been executed and the moving object determination and $\alpha$-blending process to be performed this time is the first one, the determination made in Step S406 is "NO", and the processing goes to Step S407.

Then, the moving object determination and $\alpha$-blending process is performed using the first pseudo overexposure image and the appropriate exposure image for which tentatively equal exposure values are used. A process procedure of this moving object determination and $\alpha$-blending process (Step S407) is similar to that described in the foregoing embodiment with reference to the flow chart of FIG. 3. Upon end of the moving object determination and $\alpha$-blending process performed using the first pseudo overexposure image and the appropriate exposure image, a first blending image obtained by this process is temporarily stored in the RAM 8 (Step S408), and the processing goes back to Step S406.

Then, since the first moving object determination and $\alpha$-blending process has ended, the determination made in Step S406 is "YES". Accordingly, the processing goes to Step S409 to perform another moving object determination and $\alpha$-blending process using the overexposure image and the second pseudo overexposure image for which tentatively equal exposure values are used. A process procedure of this moving object determination and $\alpha$-blending process (Step S409) is also similar to that described in the foregoing example with reference to the flow chart of FIG. 3.

Upon end of the moving object determination and $\alpha$-blending process performed using the overexposure image and the second pseudo overexposure image, a second blending image obtained as a result of this process is temporarily stored in the RAM 8 (Step S410).

Subsequently, pixels of the first blending image, the second blending image and the underexposure image, which have temporarily been stored in the RAM 8, are added and synthesized, thereby generating YUV image data representing the resulting synthesized image (Step S411).

Thereafter, the YUV image data of the synthesized image PM serving as a completed image is encoded in a JPEG format and converted into a file, and is recorded and stored in the image recorder 6 (Step S412), thus ending the processing.

In this variation, the pixels of the first blending image, the second blending image and the underexposure image are added and synthesized in Step S411 so as to obtain the completed image. However, the pixels of only the first blending image and the underexposure image may be added and synthesized so as to obtain the completed image, or the pixels of the second blending image and the underexposure image may be added and synthesized so as to obtain the completed image.

Although the case where YUV image data is used has been described in the foregoing embodiments, and examples RGB image data may alternatively be used. In that case, a square difference is similarly calculated for each of RGB components.


**Claims**

1.    An image synthesizing device comprising:

an image capturing unit (1) configured to capture a plurality of images that are temporally continuous and that are comprised of pixels having pixel values; wherein capture angles of the respective captured images are substantially same, a drive controller (2) that controls the exposure amount of the captured images,
a first difference obtaining unit (10) configured to obtain differences of said pixel values between a first image and a second image of the plurality of images on pixel-by-pixel basis,
a blending unit (12) configured to employ the differences between the first image and the second image as transparency information,
**characterized in that**
the drive controller (2) controls the exposure amount of the respective captured images to be different from each other to obtain an underexposed first image with a reduced exposure amount with respect to an appropriate exposure amount and to obtain an overexposed second image with an increased exposure amount with respect to the optimal exposure amount, wherein an exposure amount of the first image, which is underexposed, is smaller than that of the second image , which is overexposed, and by comprising
a gain controller (10) configured to increase a brightness gain for said pixel values of the first image of the plurality of images such that an exposure amount of the first image is equivalent to an exposure amount of the second overexposed image of the plurality of images,
wherein the first difference obtaining unit (10) is configured to obtain differences of said pixel values between the first image provided by the gain controller (10) and the second image on pixel-by-pixel basis,
wherein the blending unit (12) configured to employ the differences between the first image provided by the gain controller (10) and the second image as transparency information, and to blend the first image provided by the gain controller (10) and the second image by using the transparency information to obtain a blended image, and
an image generator (12) configured to generate a single synthesized image by adding pixel values of the first image provided by the image capturing unit (1) and the obtained blended image.

2.    The device according to claim 1,
wherein the captured images are color images and each pixel has a pixel value for each color image component; and wherein the device further comprises
a second difference obtaining unit (10) configured to obtain differences on pixel by pixel basis between the first image and the second image, so as to obtain a maximum value of said difference among said pixel values for each color component, and
wherein the blending unit (12) is configured to calculate transparency information by averaging the differences between the first image and the second image.

3.    The device according to claim 1 or 2, wherein
the image generator (12) configured to generate a single image by adding and synthesizing the blended image and the first image.

4.    The device according to any of the claims 1 to 3,
wherein the blending unit (12) is configured to smooth the differences, and smooth the synthesized image based on the smoothed differences.

**5.** The device according to any of the claims 1 to 4,
wherein the image capturing unit (1) comprises an imaging device.

**6.** The image device according to any of the claims 1 to 5,
wherein capture angles of the respective captured images are substantially same.

**7.** An image synthesizing method comprising the steps of:

capturing a plurality of images that are temporally continuous and that are comprised of pixels having pixel values; wherein capture angles of the respective captured images are substantially same, and
**characterized by**
controlling the exposure amounts of the respective captured images to be different from each other to obtain an underexposed first image with a reduced exposure amount with respect to an appropriate exposure amount and to obtain an overexposed second image with an increased exposure amount with respect to the optimal exposure amount,
wherein an exposure amount of a first image, which is underexposed, is smaller than that of a second image, which is overexposed, and by comprising the steps of
increasing a brightness gain for said pixel values of the first image of the plurality of images such that an exposure amount of the first image is equivalent to an exposure amount of the second overexposed image of the plurality of images, and
obtaining differences of said pixel values between the first image and the second image on a pixel by pixel basis, employing the differences between the first image and the second image as transparency information and blending the first image and the second image by using the transparency information to obtain a blended image, and
generating a single synthesized image by adding pixel values of the blended image and the first captured image.

**8.** A computer-readable medium storing a program for causing the computer to perform operations according to the method of claim 7.

**Patentansprüche**

**1.** Bildherstellungsvorrichtung, die umfasst:

eine Bildaufnahmeeinheit (1), die so eingerichtet ist, dass sie eine Vielzahl von Bildern aufnimmt, die temporär kontinuierlich sind und die aus Pixeln bestehen, die Pixelwerte haben, wobei Aufnahmewinkel der jeweiligen aufgenommenen Bilder im Wesentlichen gleich sind,
eine Ansteuereinrichtung (2), die das Maß der Belichtung der aufgenommenen Bilder steuert,
eine erste Unterschiederhaltungseinheit (10), die so eingerichtet ist, dass sie Unterschiede der Pixelwerte zwischen einem ersten Bild und einem zweiten Bild der Vielzahl von Bildern Pixel für Pixel erhält,
eine Mischeinheit (12), die so eingerichtet ist, dass sie die Unterschiede zwischen dem ersten Bild und dem zweiten Bild als Transparenzinformation anwendet,
**dadurch gekennzeichnet, dass**
die Ansteuereinrichtung (2) die Maße der Belichtung der jeweiligen aufgenommenen Bilder so steuert, dass sie sich voneinander unterscheiden, um ein unterbelichtetes erstes Bild mit einem geringeren Maß der Belichtung als einem geeigneten Maß der Belichtung zu erhalten und ein überbelichtetes zweites Bild mit einem größeren Maß der Belichtung als dem optimalen Maß der Belichtung zu erhalten, wobei ein Maß der Belichtung des ersten Bildes, das unterbelichtet ist, kleiner ist als das des zweiten Bildes, das überbelichtet ist, sowie dadurch, dass sie umfasst
eine Verstärkungs-Steuereinrichtung (10), die so eingerichtet ist, dass sie eine Helligkeitsverstärkung für die Pixelwerte des ersten Bildes der Vielzahl von Bildern so erhöht, dass ein Maß der Belichtung des ersten Bildes äquivalent zu einem Maß der Belichtung des zweiten, überbelichteten Bildes der Vielzahl von Bildern ist, wobei die erste Unterschiederhaltungseinheit (10) so eingerichtet ist, dass sie Unterschiede zwischen den Pixelwerten des durch die Verstärkungs-Steuereinrichtung (10) erzeugten ersten Bildes und des zweiten Bildes Pixel für Pixel erhält,
die Mischeinheit (12) so eingerichtet ist, dass sie die Unterschiede zwischen dem durch die Verstärkungs-Steuereinrichtung (10) erzeugten ersten Bild und dem zweiten Bild als Transparenzinformation anwendet und das durch die Verstärkungs-Steuereinrichtung (10) geschaffene erste Bild und das zweite Bild unter Verwendung der Transparenzinformation mischt, um ein gemischtes Bild zu erhalten, sowie einen Bildgenerator (12), der so eingerichtet ist, dass er ein einziges hergestelltes Bild durch Addieren der Pixelwerte des durch die Bildaufnahmeeinheit (1) erzeugten ersten Bildes und des erhaltenen gemischten Bildes generiert.

2. Vorrichtung nach Anspruch 1,
wobei die aufgenommenen Bilder Farbbilder sind und jedes Pixel einen Pixelwert für jede Farbbild-Komponente hat; und
die Vorrichtung des Weiteren umfasst:

eine zweite Unterschiederhaltungseinheit (10), die so eingerichtet ist, dass sie Unterschiede zwischen dem ersten Bild und dem zweiten Bild Pixel für Pixel erhält und so einen Maximalwert des Unterschiedes zwischen den Pixelwerten für jede Farbkomponente erhält, und
die Mischeinheit (12) so eingerichtet ist, dass sie eine Transparenzinformation berechnet, indem sie die Unterschiede zwischen dem ersten Bild und dem zweiten Bild mittelt.

3. Vorrichtung nach Anspruch 1 oder 2, wobei
der Bildgenerator (12) so eingerichtet ist, dass er ein einziges Bild erzeugt, indem er das gemischte Bild und das erste Bild addiert und herstellt.

4. Vorrichtung nach einem der Ansprüche 1 bis 3,
wobei die Mischeinheit (12) so eingerichtet ist, dass sie die Unterschiede glättet und das hergestellte Bild auf Basis der geglätteten Unterschiede glättet.

5. Vorrichtung nach einem der Ansprüche 1 bis 4,
wobei die Bildaufnahmeeinheit (1) eine Bilderzeugungsvorrichtung umfasst.

6. Bildvorrichtung nach einem der Ansprüche 1 bis 5,
wobei die Aufnahmewinkel der jeweiligen aufgenommenen Bilder im Wesentlichen dieselben sind.

7. Bildherstellungsverfahren, das die folgenden Schritte umfasst:

Aufnehmen einer Vielzahl von Bildern, die temporär kontinuierlich sind und die aus Pixeln mit Pixelwerten bestehen, wobei Aufnahmewinkel der jeweiligen aufgenommenen Bilder im Wesentlichen dieselben sind, und **gekennzeichnet durch**
Steuern der Maße der Belichtung der jeweiligen aufgenommenen Bilder, so dass sie sich voneinander unterscheiden, um ein unterbelichtetes erstes Bild mit einem geringeren Maß der Belichtung als einem geeigneten Maß der Belichtung zu erhalten und ein überbelichtetes zweites Bild mit einem größeren Maß der Belichtung als dem optimalen Maß der Belichtung zu erhalten, wobei ein Maß der Belichtung eines ersten Bildes, das unterbelichtet ist, geringer ist als das eines zweiten Bildes, das überbelichtet ist, und **dadurch**, dass es die folgenden Schritte umfasst:

Erhöhen einer Helligkeits-Verstärkung für die Pixelwerte des ersten Bildes der Vielzahl von Bildern, so dass ein Maß der Belichtung des ersten Bildes äquivalent zu einem Maß der Belichtung des zweiten, überbelichteten Bildes der Vielzahl von Bildern ist, und
Erhalten von Unterschieden zwischen den Pixelwerten des ersten Bildes und des zweiten Bildes Pixel für Pixel,
Anwenden der Unterschiede zwischen dem ersten Bild und dem zweiten Bild als Transparenzinformation und Mischen des ersten Bildes und des zweiten Bildes unter Verwendung der Transparenzinformation, um ein gemischtes Bild zu erhalten, und
Erzeugen eines einzelnen hergestellten Bildes **durch** Addieren von Pixelwerten des gemischten Bildes und des ersten aufgenommenen Bildes.

8. Computerlesbares Medium, das ein Programm speichert, mit dem der Computer veranlasst wird, Vorgänge gemäß dem Verfahren nach Anspruch 7 durchzuführen.

**Revendications**

1. Dispositif de synthèse d'image comprenant :

   une unité de capture d'images (1) configurée pour capturer une pluralité d'images qui sont continues dans le temps et qui sont constituées de pixels ayant des valeurs de pixel, dans lequel les angles de capture des images respectives capturées sont sensiblement les mêmes, un contrôleur de commande (2) qui commande la valeur d'exposition des images capturées,
   une première unité d'obtention de différence (10) configurée pour obtenir les différences desdites valeurs de pixel entre une première image et une deuxième image de la pluralité d'images, pixel par pixel,
   une unité de mélange (12) configurée pour utiliser les différences entre la première image et la deuxième image en tant qu'informations de transparence,
   **caractérisé en ce que**
   le contrôleur de commande (2) commande la valeur d'exposition des images capturées respectives de manière à être différentes entre elles afin d'obtenir une première image sous-exposée avec une valeur d'exposition réduite par rapport à une valeur d'exposition appropriée et obtenir une deuxième image surexposée avec une valeur d'exposition accrue par rapport à la valeur d'exposition optimale, dans lequel la valeur d'exposition de la première image, qui est sous-exposée, est inférieure à celle de la deuxième image, qui est surexposée, et
   **en ce qu'**il comprend
   un contrôleur de gain (10) configuré pour augmenter le gain de luminosité pour lesdites valeurs de pixel de la première image de la pluralité d'images de sorte que la valeur d'exposition de la première image est équivalente à la valeur d'exposition de la deuxième image surexposée de la pluralité d'images,
   dans lequel la première unité d'obtention de différence (10) est configurée pour obtenir les différences desdites valeurs de pixels entre la première image fournie par le contrôleur de gain (10) et la deuxième image, pixel par pixel,
   dans lequel l'unité de mélange (12) est configurée pour utiliser les différences entre la première image fournie par le contrôleur de gain (10) et la deuxième image en tant qu'informations de transparence, et pour mélanger la première image fournie par le contrôleur de gain (10) et la deuxième image en utilisant les informations de transparence pour obtenir une image mélangée, et
   un générateur d'image (12) configuré pour générer une image synthétisée unique en ajoutant les valeurs de pixel de la première image fournie par l'unité de capture d'images (1) et l'image mélangée obtenue.

2. Dispositif selon la revendication 1,
   dans lequel les images capturées sont des images couleur et chaque pixel possède une valeur de pixel pour chaque composante d'image ; et
   dans lequel le dispositif comprend en outre :

   une deuxième unité d'obtention de différence (10) configurée pour obtenir les différences, pixel par pixel, entre la première image et la deuxième image, de façon à obtenir une valeur maximale de ladite différence parmi lesdites valeurs de pixel pour chaque composante de couleur ; et
   dans lequel l'unité de mélange (12) est configurée pour calculer des informations de transparence en effectuant la moyenne des différences entre la première image et la deuxième image.

3. Dispositif selon la revendication 1 ou 2, dans lequel
   le générateur d'images (12) est configuré pour générer une image unique par addition et synthèse de l'image mélangée et de la première image.

4. Dispositif selon l'une quelconque des revendications 1 à 3,
   dans lequel l'unité de mélange (12) est configurée pour lisser les différences et pour lisser l'image synthétisée en se basant sur les différences lissées.

5. Dispositif selon l'une quelconque des revendications 1 à 4,
   dans lequel l'unité de capture d'images (1) comprend un dispositif d'imagerie.

6. Dispositif d'image selon l'une quelconque des revendications 1 à 5,
   dans lequel les angles de capture des images capturées respectives sont sensiblement les mêmes.

7. Procédé de synthèse d'image comprenant les étapes consistant à :

capturer une pluralité d'images qui sont continues dans le temps et qui sont constituées de pixels ayant des valeurs de pixel, dans lequel les angles de capture des images respectives capturées sont sensiblement les mêmes, et

**caractérisé par**

la commande des valeurs d'exposition des images capturées respectives de manière à être différentes entre elles afin d'obtenir une première image sous-exposée avec une valeur d'exposition réduite par rapport à une valeur d'exposition appropriée et obtenir une deuxième images surexposée avec une valeur d'exposition accrue par rapport à la valeur d'exposition optimale, dans lequel la valeur d'exposition de la première image, qui est sous-exposée, est inférieure à celle de la deuxième image, qui est surexposée, et en ce qu'il comprend les étapes consistant à

augmenter le gain de luminosité pour lesdites valeurs de pixel de la première image de la pluralité d'images de sorte que la valeur d'exposition de la première image est équivalente à la valeur d'exposition de la deuxième image surexposée de la pluralité d'images, et

obtenir les différences desdites valeurs de pixels entre la première image et la deuxième image, pixel par pixel, utiliser les différences entre la première image et la deuxième image en tant qu'informations de transparence, et mélanger la première image et la deuxième image en utilisant les informations de transparence pour obtenir une image mélangée, et

générer une image synthétisée unique en ajoutant les valeurs de pixel de l'image mélangée et de la première image capturée.

8. Support lisible par un ordinateur contenant un programme pour faire exécuter par l'ordinateur les opérations du procédé selon la revendication 7.

# FIG. 1

EP 2 571 249 B1

# FIG. 2

START

S101
IS PRESSING
OF SHUTTER KEY
DETECTED?

NO

YES

EXECUTE CONTINUOUS CAPTURE
OF N IMAGES — S102

STORE 1 TO N CONTINUOUSLY
CAPTURED IMAGES — S103

SELECT SINGLE REFERENCE IMAGE — S104

PERFORM NOISE REDUCTION
PROCESS — S105

TEMPORARILY STORE REFERENCE
IMAGE ON WHICH NOISE REDUCTION
HAS BEEN PERFORMED — S106

REDUCE NOISE OF IMAGES AND
SYNTHESIZE IMAGES — S107

TEMPORARILY STORE
SYNTHESIZED IMAGE — S108

PERFORM MOVING OBJECT
DETERMINATION AND
$\alpha$-BLENDING PROCESS — S109

STORE COMPLETED IMAGE
CONVERTED INTO FILE — S110

END

# FIG. 3

```
          ┌─────────┐
          │  START  │
          └─────────┘
               │
               ▼
┌──────────────────────────────────┐
│ OBTAIN Y DIFFERENCE ABSOLUTE VALUE,│
│  U DIFFERENCE ABSOLUTE VALUE AND   │ ～S201
│   V DIFFERENCE ABSOLUTE VALUE ON   │
│      A PIXEL-BY-PIXEL BASIS        │
└──────────────────────────────────┘
               │
               ▼
┌──────────────────────────────────┐
│  SELECT DIFFERENCE ABSOLUTE VALUE  │ ～S202
│   AT WHICH DIFFERENCE IS MAXIMIZED │
└──────────────────────────────────┘
               │
               ▼
┌──────────────────────────────────┐
│   EXECUTE PROCESS FOR AVERAGING    │
│      MAXIMUM DIFFERENCES OF        │ ～S203
│        RESPECTIVE IMAGES          │
└──────────────────────────────────┘
               │
               ▼
┌──────────────────────────────────┐
│      EXECUTE SMOOTHING PROCESS     │ ～S204
└──────────────────────────────────┘
               │
               ▼
┌──────────────────────────────────┐
│     PERFORM ENHANCEMENT PROCESS    │ ～S205
│ (FOR INCREASING CONTRAST OF α MAP) │
└──────────────────────────────────┘
               │
               ▼
┌──────────────────────────────────┐
│ SYNTHESIS IS PERFORMED USING MOVING│ ～S206
│  OBJECT DETERMINATION MAP AS α MAP │
└──────────────────────────────────┘
               │
               ▼
          ┌─────────┐
          │   END   │
          └─────────┘
```

# FIG. 4

TIME t

# FIG. 5A

M

# FIG. 5B

M

H

## FIG. 6A

## FIG. 6B

# FIG. 7

EP 2 571 249 B1

# FIG. 8

START

↓

S301 · IS PRESSING OF SHUTTER KEY DETECTED?
NO (loops back)
YES ↓

TEMPORARILY STORE IMAGE (UNDEREXPOSURE IMAGE) CAPTURED AT -1 EV — S302

↓

TEMPORARILY STORE IMAGE (OVEREXPOSURE IMAGE) CAPTURED AT +1 EV — S303

↓

INCREASE GAIN OF UNDEREXPOSURE IMAGE, AND GENERATE AND TEMPORARILY STORE PSEUDO OVEREXPOSURE IMAGE — S304

↓

PERFORM MOVING OBJECT DETERMINATION AND α-BLENDING PROCESS — S305

↓

TEMPORARILY STORE BLENDING IMAGE — S306

↓

ADD AND SYNTHESIZE PIXELS OF BLENDING IMAGE AND UNDEREXPOSURE IMAGE — S307

↓

STORE COMPLETED IMAGE (YUV) CONVERTED INTO FILE — S308

↓

END

# FIG. 9A

# FIG. 9B

# FIG. 10A

# FIG. 10B

# FIG. 11

START

S401 — IS PRESSING OF SHUTTER KEY DETECTED?

NO (loops back)

YES

S402 — TEMPORARILY STORE IMAGE (UNDEREXPOSURE IMAGE) CAPTURED AT -2 EV

S403 — TEMPORARILY STORE IMAGE (APPROPRIATE EXPOSURE IMAGE) CAPTURED AT 0 EV

S404 — TEMPORARILY STORE IMAGE (OVEREXPOSURE IMAGE) CAPTURED AT +2 EV

S405 — INCREASE FIRST AND SECOND GAINS OF UNDEREXPOSURE IMAGE, AND GENERATE AND TEMPORARILY STORE FIRST AND SECOND PSEUDO OVEREXPOSURE IMAGES

S406 — IS FIRST MOVING OBJECT DETERMINATION AND α-BLENDING PROCESS ENDED?

NO

S407 — PERFORM MOVING OBJECT DETERMINATION AND α-BLENDING PROCESS USING FIRST PSEUDO OVEREXPOSURE IMAGE AND APPROPRIATE EXPOSURE IMAGE

S408 — TEMPORARILY STORE FIRST BLENDING IMAGE

YES

S409 — PERFORM MOVING OBJECT DETERMINATION AND α-BLENDING PROCESS USING OVEREXPOSURE IMAGE AND SECOND PSEUDO OVEREXPOSURE IMAGE

S410 — TEMPORARILY STORE SECOND BLENDING IMAGE

S411 — ADD AND SYNTHESIZE PIXELS OF FIRST AND SECOND BLENDING IMAGES AND UNDEREXPOSURE IMAGE

S412 — STORE COMPLETED IMAGE (YUV) CONVERTED INTO FILE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010165968 A
- JP 2010182677 A
- JP 2006148550 A
- EP 1933271 A1
- EP 1752947 A1